# EUROPÄISCHE PATENTSCHRIFT

(11) **EP 1 236 912 B1**
(45) Veröffentlichungstag und Bekanntmachung des Hinweises auf die Patenterteilung: **22.11.2006**
(21) Anmeldenummer: 02003784.2
(22) Anmeldetag: 20.02.2002
(51) Int. Cl.: F16C 29/04, F16C 33/38

(54) **Linearbewegungsführung mit einem zwangsgeführten Käfig für Wälzkörper**
Linear motion guide with guided cage for rolling elements
Guidage linéaire avec cage guidé pour éléments roulants

(30) Priorität: 22.02.2001 CH 20010314; 13.06.2001 CH 20011063
(43) Veröffentlichungstag der Anmeldung: 04.09.2002
(73) Patentinhaber: Schneeberger Holding AG, 4914 Roggwil (CH)
(72) Erfinder: Vegh, Peter, 4147 Aesch (CH); Wirth, Samuel, 4123 Allschwil (CH); Mischler, Ernst, 4914 Roggwil (CH); Egger, Hans, 5643 Sins (CH)
(74) Vertreter: EGLI-EUROPEAN PATENT ATTORNEYS

(56) Entgegenhaltungen:
- DE-A- 4 142 061
- GB-A- 892 596
- US-A- 4 262 974
- US-A- 4 524 671
- US-A- 5 076 715
- US-A- 5 427 454

## Beschreibung

Die Erfindung betrifft eine Linearbewegungsführung zur Lagerung und Längsführung von Maschinenteilen, bei der ein zur Befestigung an einem Maschinenteil vorgesehener erster Führungskörper über mehrere Wälzkörper gegenüber einem zweiten, ebenfalls zur Befestigung an einem Maschinenteil vorgesehenen Führungskörper entlang einer Längsbewegungsachse geführt ist, hierzu jeder Führungskörper eine parallel zur Längsbewegungsachse verlaufende nutenförmige Ausnehmung aufweist, Begrenzungsflächen der Ausnehmung jedes Führungskörpers als Wälzflächen für die Wälzkörper vorgesehen sind, die Wälzkörper zwischen den beiden Führungskörpern in einer oder in mehreren Reihen in zumindest einem Käfig hintereinander angeordnet sind, der Käfig mit zumindest einem ersten Zwangsführungsmittel versehen ist, wobei der Käfig mit seinem ersten Zwangsführungsmittel mit an den Führungskörpern befestigten zweiten Zwangsführungsmitteln geführt ist, jedes zweite Zwangsführungsmittel nur an einem der Führungskörper angeordnet und in bezug auf diesen ortsfest ist.

Gattungsgemäße Linearbewegungsführungen weisen somit zumindest eine Reihe von Wälzkörpern auf, die sich in den Nuten stets in geradliniger Bewegung abwälzen. Anders als in Linearbewegungs-Umlaufführungen verlassen bei gattungsgemäßen Linearbewegungsführungen die Wälzkörper ihre geradlinige Bewegungsbahn, in der sie mit beiden Führungskörpern in lasttragender Funktion in Kontakt sind, nicht. Linearbewegungsführungen der vorbeschriebenen Art sind üblicherweise vorgesehen, um Relativbewegungen von Maschinenkomponenten zu ermöglichen.

Damit die Wälzkörper stets in vorbestimmten Abständen zueinander angeordnet sind, ist es seit langem bekannt, die Wälzkörper in einem sogenannten Käfig anzuordnen. In einem Käfig ist für jeden Wälzkörper eine eigene Einfassung vorgesehen, in der sich der Wälzkörper drehend bewegen kann. Der sich linear bewegende Führungskörper erzeugt bei den Wälzkörpern eine Drehbewegung aus der auch eine lineare Bewegung der Wälzkörper resultiert, durch die wiederum der Käfig in einer linearen Bewegung mitgenommen wird.

An sich ist die Position des Käfigs und der Wälzkörper gegenüber den beiden Führungskörpern stets vorbestimmt. Aufgrund von äußeren Einflüssen kann sich jedoch eine Verschiebung von Wälzkörpern gegenüber ihrer vorbestimmten Sollposition ergeben. Dies kann zu einer Verschiebung des Käfigs führen, was wiederum eine Veränderung des Verschiebebereichs zur Folge hat, in dem die beiden Führungskörper, bzw. die mit ihnen verbundenen Maschinenkomponenten, gegeneinander verschoben werden können. Um eine solche, üblicherweise als "Käfigwandern" bezeichnete, Bewegung zu vermeiden existieren bereits verschiedene Formen von Zwangsführungen des Käfigs.

So ist in einer ersten vorbekannten Zwangsführung vorgesehen, einen Käfig mit einem Zahnrad zu verbinden. Das Zahnrad befindet sich außerhalb der beiden Nuten, neben den beiden Führungskörpern. Das Zahnrad greift in zwei Zahnstangen, die jeweils an einem der beiden Maschinenteilen befestigt sind, welche die Relativbewegungen ausführen sollen. An dieser Lösung ist nicht zufriedenstellend, daß aufgrund der erforderlichen Befestigung der Zahnstangen an den Maschinenteilen der Hersteller der Linearbewegungsführung diese nicht voreingestellt ausliefern kann. Die Zahnstangen müssen vom Maschinenhersteller selbst angebracht und die einzelnen Führungsbauteile vergleichsweise eng toleriert werden, damit die Verzahnung funktionsfähig ist.

Die gleiche Problematik ergibt sich bei der in der US 4,524,671 gezeigten Lösung. In dieser Schrift wird eine auf Wälzlagern basierende Linearführung eines Kanonenrohres gegenüber einer Führungshülse gezeigt. Hierzu sind am Kanonenrohr sogenannte Leisten und an der Führungshülse Lagerschienen ausgebildet. Die Wälzkörper sind in einem Käfig in einem Abstandsbereich zwischen jeweils einer Leiste und einer Lagerschiene angeordnet. Zur Zwangsführung der Kanone ist des weiteren an der Leiste und den Lagerschienen jeweils eine Zahnstange befestigt, in die ein am Käfig angeordnetes Zahnrad eingreift. Sowohl das Zahnrad als auch die Zahnstangen befinden sich ausserhalb des für die Wälzkörper vorgesehenen Abstandsbereichs einer der Leisten gegenüber einer der Lagerschienen.

In einer anderen, unter anderem aus der US 5,427,454, vorbekannten Lösung ist in beiden Führungskörpern in deren Nutgrund jeweils eine Zahnstange eingebracht. Ein mit dem Käfig verbundenes Zahnrad ist von beiden Zahnstangen zwangsgeführt. Hieran kann als nachteilig empfunden werden, daß die Führungskörper aufgrund der einzubringenden Zahnstangen einen hohen Fertigungsaufwand benötigen. Zudem zeigt sich die Montage der Führung als schwierig, da die Position des Käfigs nicht mehr verändert werden kann, sobald das Zahnrad in die Zahnstangen eingreift. Eine weitere Schwierigkeit besteht in der gegenseitigen Ausrichtung der beiden in den Nuten angeordneten Zahnstangen, so dass beide Zahnstangen korrekt in das Zahnrad eingreifen. Ausserdem besteht bei der Montage die Gefahr der Beschädigung von Zähnen.

Schliesslich ist eine weitere Führung bekannt geworden, bei der ein Käfig der Wälzkörper zwangsgeführt ist. z.B. bei der DE 4 142 061 A ist an den beiden Stirnseiten des Käfigs jeweils eine Umlenkrolle angebracht, in der jeweils ein dünnes Seil bzw. eine Saite geführt ist. Die Enden der beiden Seile sind jeweils an den Stirnseiten der Führungskörper befestigt. Auch diese Lösung bringt eine aufwendige Montage mit sich. Ausserdem sind die erforderlichen dünnen Saiten bzw. die kleinen Umlenkrollen defektanfällig. Zudem hat sich gezeigt, daß aufgrund von äußeren Einflüssen, wie beispielsweise Temperaturänderungen, Längenänderungen der Saiten auftreten können. Die Längenänderungen führen zu einem Spiel des Käfigs oder sogar zu Verspannungen des Käfigs zwischen den beiden Saiten. Wird der Käfig anstelle von Saiten durch elastische Federkörper geführt wird, wie dies in der US 4,262,974 gezeigt ist, so ist eine exakte Zwangsführung kaum zu erreichen.

Der Erfindung liegt deshalb die Aufgabe zugrunde eine Linearbewegungsführung zu schaffen, die bei möglichst genauer Führung des Käfigs günstige Fertigungs- und Montageeigenschaften zeigt.

Diese Aufgabe wird bei einer Vorrichtung der eingangs genannten Art erfindungsgemäß dadurch gelöst, dass die zweiten Zwangsführungsmittel ausserhalb der nutenförmigen Ausnehmungen am jeweiligen Führungskörper befestigt sind, zur Führung des ersten Zwangsführungsmittel zwischen die beiden Führungskörper ragen und hier mit dem ersten Zwangsführungsmittel in Wirkverbindung stehen.

Bei einer erfindungsgemäßen Linearbewegungsführung können sämtliche Zwangsführungsmittel bereits vom Hersteller miteinander in funktionsfähige Wirkverbindung gebracht werden, da sämtliche Zwangsführungsmittel an der Linearbewegungsführung selbst angebracht sind. Dies hat auch zur Folge, dass an den Maschinenteilen, außer den Führungskörpern selbst, keine weiteren Bauteile der Linearbewegungsführung angebracht werden müssen. Da die zweiten Zwangsführungsmittel an gut zugänglichen, vorzugsweise auch im montierten Zustand der Linearbewegungsführung aussenliegenden Flächen, wie beispielsweise Seitenflächen, der Führungskörper befestigt werden, sind erfindungsgemässe Linearbewegungsführungen auch vergleichsweise einfach zu montieren. Selbstverständlich wäre es auch möglich, jedes der zweiten Zwangsführungsmittel an einer ausserhalb der Nut liegenden Aussenfläche von einem der Führungskörper anzubringen, die im montierten Zustand der Linearbewegungsführung einer Aussenfläche des anderen Führungskörpers gegenüberliegt. Anders ausgedrückt könnten die zweiten Zwangsführungsmittel auch an Flächen der Führungskörper befestigt werden, die einen Spalt zwischen den beiden Führungskörpern begrenzen.

Ein zusätzlicher Vorteil besteht darin, dass zur Bildung einer erfindungsgemäßen Linearbewegungsführung relativ einfach zu fertigende herkömmliche Führungskörper verwendet werden können. Diese Führungskörper müssen lediglich dahingehend modifiziert werden, dass eine Befestigung der zweiten Zwangsführungsmittel an ihnen möglich ist.

Bei erfindungsgemässen Linearführungen sollten die zweiten Zwangsführungsmittel ortsfest, d.h. in Bezug auf die zweiten Zwangsführungsmittel im wesentlichen unbeweglich, an ihrem Führungskörper befestigt sein. Unbewegliche Bauteile sind mit vergleichsweise wenig Aufwand montierbar und im Betrieb zudem auch wenig defektanfällig.

Bei erfindungsgemässen Linearführungen können die Zwangsführungsmittel der Führungskörper vorzugsweise in sich steif sein, um auch andere Belastungen als nur reine Zugbelastungen aufnehmen bzw. übertragen zu können, wie dies bei den vorbekannten Seilen der Fall ist. Die Eigenschaft "in sich steif" ist deshalb als Gegensatz zu den biegeschlaffen Seilen zu verstehen. Um Beschädigungen der Zwangsführungsmittel zu vermeiden, kann es von Vorteil sein, wenn diese trotz ihrer Steifigkeit eine gewisse Elastizizät aufweisen, um durch reversible Verformung Belastungen aufnehmen zu können. Durch die Elastizität kann ein frühzeitiger Bruch des Bauteils vermieden werden. Die Zwangsführungsmittel können deshalb mit Vorteil aus einem entsprechenden metallischen Werkstoff oder aus Kunststoff gestaltet sein.

Gemäss der vorliegenden Erfindung weisen die zweiten Zwangsführungsmittel der Linearbewegungsführungen jeweils einen Wirkverbindungsteil auf, der mit dem ersten Zwangsführungsmittel in Wirkverbindung steht, wobei der an dem Führungskörper ortsfest angeordnete Wirkverbindungsteil eine Längserstreckung hat, die parallel zur Längsbewegungsachse verläuft.

Hierbei kann eine grösste Länge der beiden Wirkverbindungsteile in Verschieberichtung ca. der Hälfte, bzw. geringfügig mehr als der Hälfte, des maximalen Verschiebeweges entsprechen, entlang dem die beiden Führungskörper gegeneinander verschoben werden können. Bei auf Wälzkörpern basierenden gattungsgemässen Linearführungen legt der Käfig stets die Hälfte des Verschiebeweges zurück, den die beiden Führungskörper als Relativbewegung zueinander ausführen. Wird die Länge der Wirkverbindungsteile geringfügig länger als die Hälfte des Verschiebeweges gewählt, kann auch am Ende des Verschiebeweges eine sichere Wirkverbindung zwischen den Zwangsführungsmitteln sichergestellt werden.

Gemäss der vorliegenden Erfindung ist ein Zwangsführungsmittel ein am Käfig um eine Drehachse drehbar befestigtes Zahnrad. Das Zahnrad befindet sich vorzugsweise in der Mitte des Käfigs. Insbesondere wenn auf den Käfig hohe Kräfte einwirken, können auch mehrere Zahnräder vorgesehen sein. Die zweiten Führungsmittel sind zwei Zahnstangen, von denen jeweils eine an einem der Führungskörper angebracht sein kann. Dies bietet den Vorteil hoher Funktionssicherheit von auf Zahnrad/Zahnstangen basierenden Zwangsführungen, ohne den Nachteil einer schwierigen Montage oder der Beschädigung von Zähnen bei der Montage mit sich zu bringen.

Es ist hierbei weiter bevorzugt, dass die Zahnstangen in Bezug auf einen Querschnitt als Winkelprofil ausgebildet sind, wobei dieses einen Befestigungsschenkel und einen diesem gegenüber abgewinkelten Zahnschenkel aufweisen kann. Der Befestigungsschenkel ist mit Vorteil an einer frei zugänglichen, parallel zur Längsbewegungsachse verlaufenden Seitenfläche des entsprechenden Führungskörpers angebracht. Der als Wirkverbindungsteil des zweiten Zwangsführungsmittels vorgesehene Zahnschenkel kann in einem Spalt zwischen den beiden Führungskörpern eingreifen und dort mit dem zweiten Zwangsführungsmittel in Wirkverbindung stehen.

Werden die Zahnstangen an Außenflächen der Führungskörper auf jeweils unterschiedlichen Seiten der beiden Führungskörper angebracht, so können die beiden Führungskörper einschließlich der an den Führungskörpern erforderlichen Befestigungsmittel völlig baugleich gestaltet sein. Dies reduziert den Fertigungsaufwand.

Zwar ist erfindungsgemäss eine auf Zahneingriffen basierende Zwangsführung bevorzugt. Anstelle von dieser können aber auch andere form- oder auch kraftschlüssige Zwangsführungen vorgesehen sein, wie beispielsweise magnetische oder induktive Kräfte nutzende Zwangsführungen.

Weitere bevorzugte Ausgestaltungen der Erfindung ergeben sich aus den Ansprüchen und der Zeichnung.

Die Erfindung wird anhand eines in den Figuren rein schematisch dargestellten Ausführungsbeispiels näher erläutert, es zeigen:
- Fig. 1: eine Schnittdarstellung einer auf Kugeln als Wälzkörper basierenden erfindungsgemässen Ausführungsform.
- Fig. 2: eine Schnittdarstellung der Linearführung von Fig. 1 entlang der Linie einer II - II.
- Fig. 3: einen Führungskörper mit eingesetztem Käfig einer auf Rollen basierenden erfindungsgemässen Linearbewegungsführung;
- Fig. 4: eine Schnittdarstellung eines weiteren erfindungsgemässen Ausführungsbeispiels;
- Fig. 5: eine Frontansicht einer Zahnstange aus Fig. 4;
- Fig. 6: eine Darstellung eines Querschnittes des Ausführungsbeispiels von Fig. 4 in der Nähe einer Stirnseite der Führungskörper;
- Fig. 7: eine Seitenansicht auf einen der Führungskörper von Fig. 6;
- Fig. 8: eine Darstellung gemäss der Linie VIII - VIII von Fig. 7.

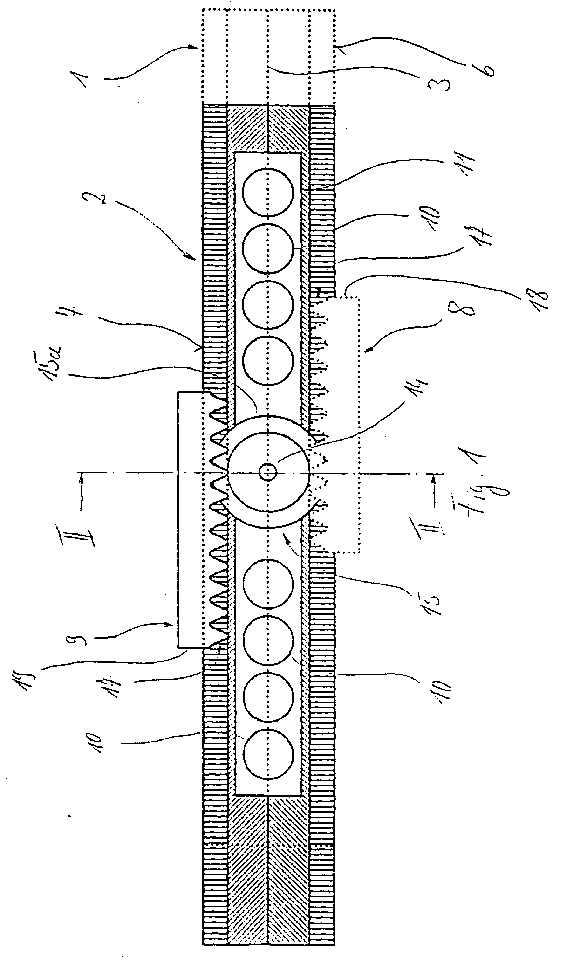

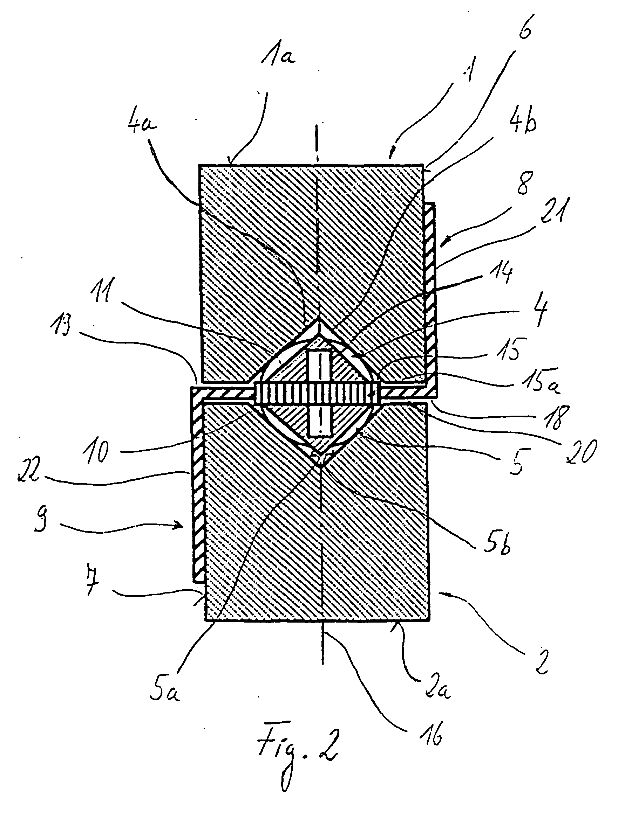

In Fig. 1 und 2 ist eine erfindungsgemässe Linearbewegungsführung gezeigt, die zwei als Profilleisten ausgebildete Führungskörper 1, 2 aufweist. Die Richtung der Längserstreckung der beiden Führungskörper 1, 2 entspricht einer Längsbewegungsachse 3, entlang welcher eine Relativbewegung zwischen den beiden Führungskörpern möglich ist. In jeden der im Querschnitt rechteckförmigen Führungskörper 1, 2 ist eine einzige V-förmige Nut 4, 5 eingebracht. Die beiden Nuten 4, 5 liegen sich mit ihren Öffnungsseiten gegenüber und sind im Querschnitt als gleichschenklige Dreiecke mit einem Öffnungswinkel von jeweils 90° ausgebildet. Begrenzungsflächen 4a, 4b, 5a, 5b der beiden Nuten 4, 5 fungieren als Wälzflächen für Wälzkörper. Die Nuten 4, 5 erstrecken sich jeweils über die gesamte Länge ihres Führungskörpers 1, 2. Wie nachfolgend noch näher erläutert wird, befindet sich in den Nuten 4, 5 eine Baueinheit, die einen Käfig sowie darin angeordnete Wälzkörpern und ein als Zahnrad ausgebildetes erstes Zwangsführungsmittel aufweist. Durch diese Baueinheit werden zwischen den beiden Führungskörpern Relativbewegungen möglich. Auf die Baueinheit wird nachfolgend noch näher eingegangen.

An jeweils einer äußeren, parallel zur Längsbewegungsachse verlaufenden Seitenfläche 6, 7 jedes Führungskörpers ist ein zweites Zwangsführungsmittel in Form einer Zahnstange 8, 9 mittels mehrerer nicht dargestellter Schrauben befestigt. Selbstverständlich sind auch andere Befestigungsarten wie beispielsweise Schnappverbindungen möglich. Die Zahnstangen 8, 9 können ebenso wie das Zahnrad aus einem metallischen Werkstoff oder Kunststoff und aufgrund einer entsprechenden Werkstoffwahl und einer ausreichenden Dimensionierung in sich steif ausgebildet sein. Wie in beiden Figuren ersichtlich ist, sind die Zahnstangen 8, 9 an den Führungskörpern 1, 2 an jeweils unterschiedlichen Seiten der Linearbewegungsführung befestigt. Eine grösste Länge in Verschieberichtung der beiden Zahnstangen entspricht ca. der Hälfte, bzw. geringfügig mehr als der Hälfte, des maximalen Verschiebeweges, entlang dem die beiden Führungskörper gegeneinander verschoben werden können.

In der in den Figuren gezeigten Ausführungsform sind die Wälzkörper als Kugeln 10 ausgebildet. Sämtliche Kugeln 10 sind in lediglich einer, zur Zeichenebene von Fig. 2 senkrechten, Reihe hintereinander angeordnet. Die Kugeln 10 liegen an den beiden Wälzflächen 4a, 4b; 5a, 5b jeder Nut 4, 5 an und übertragen die Last von dem mit dem beweglichen Führungskörper 1 verbundenen (nicht gezeigten) Maschinenteil auf den ortsfesten, beispielsweise mit einem Maschinengestell, verbundenen Führungskörper 2. Jeweils aufeinanderfolgende Kugeln 10 sind mit gleichem Abstand zueinander in Aufnahmen des Käfigs 11 angeordnet. Die Kugeln 10 befinden sich hierbei mit geringem Spiel in ihren Aufnahmen, so dass sie sich in ihren Aufnahmen frei drehen können.

Die Querschnittdarstellung von Fig. 2 läuft exakt durch eine Rotationsachse 16 des Zahnrades 15, die sich vorzugsweise in der Mitte (in Bezug auf die Längserstreckung) des Käfigs 11 befinden kann. Wie in Fig. 2 erkennbar ist, befindet sich das mit einer Drehwelle 14 am Käfig 11 angeordnete scheibenförmige, stark schematisiert dargestellte, Zahnrad 15 auch in einer Richtung quer zur Längsbewegungsachse in der Mitte des Käfigs 11. Die Drehwelle 14 bildet die Rotationsachse 16 des Zahnrades 15 aus. Diese ist senkrecht zur Längsbewegungsachse 3 und senkrecht zu äußeren Anlageflächen 1a, 2a der Führungskörper 1, 2 ausgerichtet, an denen Maschinenteile an den Führungskörpern anliegen. Durch diese Ausrichtung des Zahnrades 15 verläuft die Längsbewegungsachse durch eine Umfangsfläche des Zahnrades 15 an der eine Verzahnung 15a ausgebildet ist.

Das Zahnrad 15 steht in ständigem Eingriff mit Verzahnungen 17 (vgl. Fig. 1) von Zahnschenkeln 18, 19 jeder Zahnstange 8, 9. Die Verzahnungen 17 sind als Geradverzahnung an den freien Enden zweier Zahnschenkel 18, 19 ausgebildet. Die Zahnschenkel 18, 19 wiederum sind als Schenkel von jeweils einer der beiden Zahnstangen 8, 9 vorgesehen. Die beiden Zahnschenkel 18, 19 greifen von unterschiedlichen Seiten in einen Spalt 20 ein (Fig. 2), der zwischen den beiden Führungskörpern 1, 2 ausgebildet ist. Ein zu dem Zahnschenkel 18, 19 jeder Zahnstange 8, 9 rechtwinklig abgewinkelter Befestigungsschenkel 21, 22 ist jeweils an den äusseren Seitenfläche 6, 7 der Führungskörper 1, 2 angebracht. Wie in Fig. 2 gezeigt ist, ist der Befestigungsschenkel 21 der Zahnstange 8 des beweglichen Führungskörper 1 an dessen rechten äußeren Seitenfläche 6 angebracht. Der Befestigungsschenkel 22 der Zahnstange 9 des ortsfesten Führungskörpers 2 ist hingegen an dessen linken äußeren Seitenfläche 7 befestigt.

Hieraus ist zu erkennen, dass sowohl die beiden Führungskörper 1, 2 als auch die beiden Zahnstangen 8, 9 in Bezug auf ihre jeweiligen Querschnitte identisch gestaltet sein können, was den Fertigungsaufwand erheblich reduziert. Die beiden Führungskörper 1, 2 bzw. die beiden Zahnstangen 8, 9 können sich lediglich in ihrer Länge voneinander unterscheiden, was auf den Fertigungsaufwand keinen, höchstens jedoch einen sehr geringen, Einfluß hat.

Bei einer linearen Bewegung des oberen Führungskörpers 1, die durch einen Antrieb des mit dem oberen Führungskörpers 1 verbundenen Maschinenteils erzeugt werden kann, bewegt sich der Führungskörper 1 mit den Wälzflächen 4a, 4b auf den Kugeln 10. Die Kugeln 10 werden hierbei durch einen Reibschluß mit den Wälzflächen 4a, 4b mitgenommen und drehen sich. Die Länge der Längsbewegung des Mittelpunktes jeder Kugel 10 beträgt hierbei die Hälfte der Länge der Längsbewegung des oberen Führungskörpers 1. Die Kugeln 10 wiederum nehmen bei ihrer Bewegung den Käfig 11 mit, der sich um die gleiche Länge linear bewegt, wie die Mittelpunkte der Kugeln. Hierdurch wird auch das Zahnrad 15 in eine Rotationsbewegung um die Rotationsachse 16 versetzt. Das Zahnrad 15 greift hierbei gleichzeitig in die Verzahnungen der beiden Zahnstangen 8, 9 ein. Aufgrund der Wirkverbindung zwischen dem Zahnrad 15 und den beiden Zahnstangen 8, 9 ist der Käfig 11 zwangsgeführt und seine Position bei einer bestimmten Längsbewegung des Führungskörpers 1 vorbestimmt.

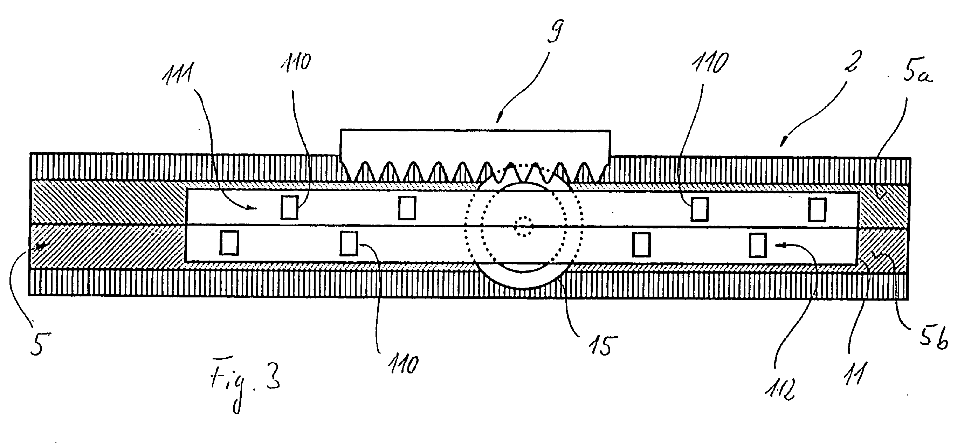

In Fig. 3 ist ein weiteres erfindungsgemässes Ausführungsbeispiel gezeigt. Zur besseren Übersichtlichkeit ist von den beiden Führungskörpern lediglich der untere Führungskörper 2 dargestellt, in dessen Nut der Käfig 11 eingesetzt ist. Auch dieser Käfig 11 nimmt in Ausnehmungen Wälzkörper und ein Zahnrad 15 auf. Dieses Ausführungsbeispiel unterscheidet sich von dem in Fig. 1 gezeigten Ausführungsbeispiel im wesentlichen nur durch andere Wälzkörper und deren Anordnung. Aus diesem Grund wird nachfolgend nur auf diesen Unterschied eingegangen. Zum einen sind in Fig. 3 Rollen 110 anstelle von Kugeln benutzt. Zum anderen sind die Rollen 110 in zwei parallel zueinander und parallel zur Längsbewegungsachse verlaufende Reihen 111, 112 angeordnet. Rollen 110 der gleichen Reihe 111, 112 zeichnen sich dadurch aus, dass sie in jeder der beiden Nuten 5 der beiden Führungskörper an der gleichen, jedoch nur an einer der Wälzflächen 5a, 5b anliegen. So liegen in Fig. 3 Rollen 110 der Reihe 111 an der Wälzfläche 5a an, während sich die Rollen 110 der Reihe 112 an der Wälzfläche 5b abstützen. Im Ausführungsbeispiel von Fig. 3 sind die Rollen der beiden Reihen 111, 112 in Längsbewegungsrichtung 3 gegeneinander versetzt angeordnet. Eine derartige in Längsbewegungsrichtung alternierende Anordnung von Wälzkörpern wird auch als Kreuzrollenführung bezeichnet.

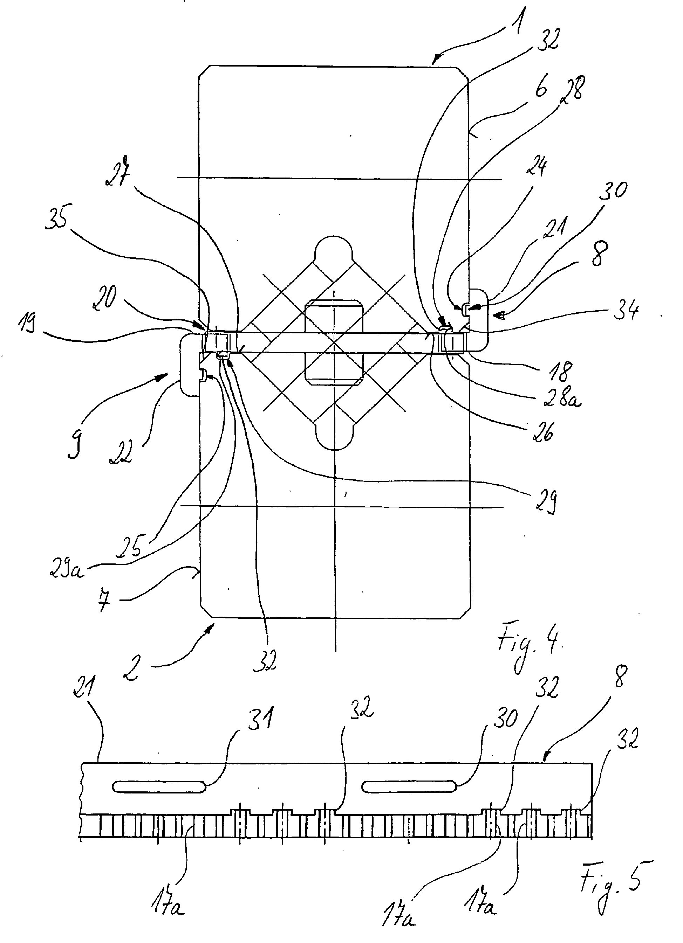

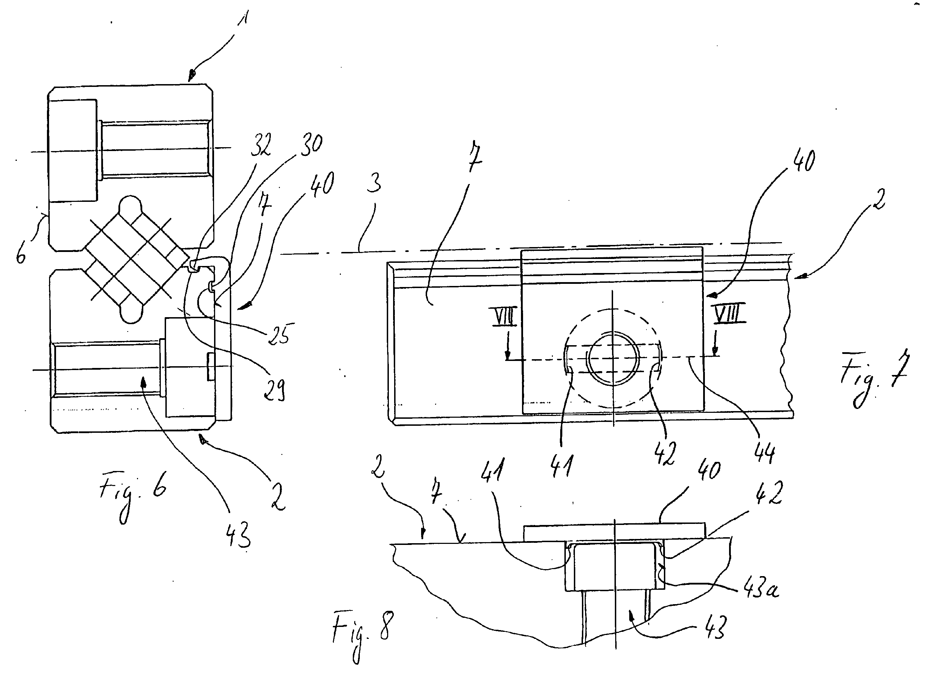

In Fig. 4 ist eine bevorzugte Befestigung von zweiten Zwangsführungsmitteln, insbesondere von einer Zahnstange 8, 9, an den jeweiligen Führungskörpern 1, 2 dargestellt. Eine solche Zahnstange 8 ist in Fig. 5 näher gezeigt. Wie Fig. 4 entnommen werden kann, weisen die Führungskörper 1, 2 an ihren aussenliegenden Seitenflächen 6, 7, an denen jeweils ein Befestigungsschenkel 21, 22 einer Zahnstange 8, 9 zur Anlage kommt, jeweils zumindest eine nutenförmige Ausnehmung 24, 25 auf, deren Längserstreckung parallel zur Längsbewegungsachse verläuft. Jeder Führungskörper 1, 2 ist ferner an jeweils einer weiteren Fläche 26, 27, die sich im Spalt 20 und gegenüber einem Zahnschenkel 18, 19 befindet, mit einer weiteren parallel zur Längsbewegungsachse verlaufenden Nut 28, 29 versehen.

Jede Zahnstange 8, 9 dieser Ausführungsform kann an ihren Befestigungsschenkeln 18, 19 zumindest zwei parallel zur Längsbewegungsachse ausgerichtete längliche Stege 30, 31 aufweisen, die zum Eingriff in eine der Nuten 24, 25 vorgesehen sind. Die Höhe der Stege 30, 31 sollte somit geringfügig kleiner sein als die Tiefe der Nuten 24, 25. Zudem weist jeder Zahnschenkel 18, 19 auf mehreren Zähnen 17a über die jeweilige Zahnbreite Vorsprünge 32 auf. Da die Vorsprünge 32 zum Eingriff in eine der Nuten 28, 29 vorgesehen sind, sollte auch hier die Höhe der Vorsprünge 32 an die Nuttiefe und gegebenenfalls einem Abstand des jeweiligen Zahnschenkels 18, 19 von der jeweiligen Fläche 26, 27 angepasst sein.

Um die Zahnstangen 8, 9 dieser Ausführungsform zu befestigen, kann vorgesehen sein, die Zahnstangen 8, 9 von einer Stirnseite eines Führungskörpers 1, 2 aus mit den Stegen 30, 31 und Vorsprüngen 32 längs in die Nuten 24, 25, 28, 29 einzuschieben. Eine Fixierung der vorzugsweise aus Kunststoff bestehenden Zahnstangen 1, 2 kann durch stirnseitig auf den Führungskörper 1, 2 aufgeschraubte und gegen die Zahnstangen anliegende (nicht dargestellte) Platten erfolgen. Die Zahnstangen 8, 9 sollten hierzu gleich lang sein wie die Führungskörper. Damit die Zahnstangen 8, 9 auch in Richtungen quer zur Längsbewegungsachse spielfrei fixiert sind, sollten die Stege 30, 31 und Vorsprünge 32 vorzugsweise gegen jene Nutflächen 28a, 29a anliegen, die den angefasten Ecken 34, 35 der Führungskörper am nächsten sind.

Es kann auch vorgesehen sein, die zweiten Führungsmittel, insbesondere die Zahnstangen 8, 9, ohne weitere Befestigungsmittel nur durch einen Formschluss und/oder Kraftschluss zwischen dem jeweiligen Führungskörper 1, 2 und dem Führungsmittel an dem Führungskörper zu befestigen. Hierzu kann beispielsweise vorgesehen sein, die Masse der Nuten 24, 25, 28, 29 auf die Masse der Stege 30, 31 und Vorsprünge 32 so abzustimmen, dass die Stege 30, 31 und Vorsprünge 32 jeweils gegen die der Ecken 34, 35 näherliegenden Nutenflächen 28a, 29a mit einer ausreichend grossen Spannkraft anliegen. Um eine der beiden vorzugsweise identischen Zahnstangen am jeweiligen Führungskörper zu montieren, kann es hierbei erforderlich sein, den Winkel, den die beiden Schenkel 18, 21; 19, 22 der jeweiligen Zahnstange 8, 9 einschliessen, etwas zu weiten. Die hierdurch entstehenden Rückstellkräfte der Schenkel können benutzt werden, um durch diese Schnappverbindung zwischen dem Führungskörper und der jeweiligen Zahnstange in Richtungen quer zur Längsbewegungsachse einen Formschluss und in einer Richtung parallel zur Längsbewegungsachse einen Kraftschluss zu erzeugen. Zur Montage einer Zahnstange an einem Führungskörper kann die Zahnstange entweder aufgeklipst oder stirnseitig aufgeschoben werden.

In den Fig. 6, 7 und 8 ist eine Möglichkeit einer Arretierung der in diesen Darstellungen nicht wiedergegebenen zweiten Führungsmittel in Richtung der Längsbewegungsachse 3 gezeigt. Hierzu wird jeweils ein im Querschnitt in etwa rechtwinkliges und in Richtung der Längsbewegungsachse 3 relativ kurzes Anschlagteil 40 im Bereich jedes stirnseitigen Endes des Führungskörpers 1, 2 an einer der Seitenflächen 6, 7 des Führungskörpers 1, 2 und in den jeweils beiden Nuten 25, 29 befestigt. Eine eventuell geringfügige Bewegungsmöglichkeit des entsprechenden zweiten Führungsmittels in Richtung der Längsbewegungsachse 3 wird durch Anschlag gegen die beiden Anschlagteile 40 jedes Führungskörpers begrenzt.

Jedes Anschlagteil 40 weist an einem der Seitenfläche 6, 7 des jeweiligen Führungskörpers gegenüberliegenden Abschnitt zwei Federschenkel 41, 42 auf, die in eine horizontale Bohrung 43 des Führungskörpers 2 eingreifen. Die Federschenkel 41, 42 befinden sich im wesentlichen auf einer Linie 44, die parallel zur Längsbewegungsachse 3 verläuft. Sie liegen unter Erzeugung einer Federkraft gegen die Bohrungswand 43a an und sichern das Anschlagteil 40 gegen Verschiebungen in eine Richtung parallel zur Längsbewegungsachse 3. Zudem weist auch das Anschlagteil 40 einen Steg 30 und einen Vorsprung 32 auf, die in die Nuten 25, 29 des Führungskörpers 2 eingreifen. Durch die auch von diesem Steg 30 und Vorsprung 32 erzeugten Spannkraft ist das Anschlagteil 40 in Richtungen quer zur Längsbewegungsachse 3 fixiert.

## Patentansprüche

1. Linearbewegungsführung zur Lagerung und Längsführung von Maschinenteilen, bei der ein zur Befestigung an einem Maschinenteil vorgesehener erster Führungskörper (1) über mehrere Wälzkörper (10, 110) gegenüber einem zweiten, ebenfalls zur Befestigung an einem Maschinenteil vorgesehenen Führungskörper (2) entlang einer Längsbewegungsachse (3) geführt ist, hierzu jeder Führungskörper (1,2) eine parallel zur Längsbewegungsachse (3) verlaufende nutenförmige Ausnehmung (4,5) aufweist, Begrenzungsflächen (4a,4b,5a,5b) der Ausnehmung (4,5) jedes Führungskörpers als Wälzflächen für die Wälzkörper (10, 110) vorgesehen sind, die Wälzkörper (10, 110) zwischen den beiden Führungskörpern (1,2) in einer oder in mehreren Reihen in zumindest einem Käfig (11) hintereinander angeordnet sind, der Käfig (11) mit zumindest einem ersten Zwangsführungsmittel (15) versehen ist, wobei der Käfig (11) mit seinem ersten Zwangsführungsmittel mit an den Führungskörpern (1,2) befestigten zweiten Zwangsführungsmitteln (8,9) geführt ist, jedes zweite Zwangsführungsmittel (9,8) nur an einem der Führungskörper (1,2) angeordnet und in bezug auf diesen ortsfest ist, wobei die zweiten Zwangsführungsmittel (8,9) ausserhalb der nutenförmigen Ausnehmungen (4, 5) am jeweiligen Führungskörper (1, 2) befestigt sind und zur Führung des ersten Zwangsführungsmittels (15) zwischen die beiden Führungskörper (1,2) ragen und hier mit dem ersten Zwangsführungsmittel (15) in Wirkverbindung stehen,
**dadurch gekennzeichnet, dass**
- die zweiten Zwangsführungsmittel (8, 9) jeweils einen mit dem ersten Zwangsführungsmittel (15) in Wirkverbindung stehenden Wirkverbindungsteil aufweisen, wobei der Wirkverbindungsteil eine Längserstreckung hat, die parallel zur Längsbewegungsachse (3) verläuft, wobei
- der Wirkverbindungsteil von zumindest einem der zweiten Zwangsführungsmittel als Zahnstange (8, 9) ausgebildet ist.

2. Linearbewegungsführung nach Anspruch 1, **dadurch gekennzeichnet, dass** zumindest eines der zweiten Zwangsführungsmittel an zumindest einer Aussenfläche (1a, 2a, 6, 7) der Führungskörper (1, 2) befestigt ist.

3. Linearbewegungsführung nach einem der vorhergehenden Ansprüche 1 und 2, **dadurch gekennzeichnet, dass** jedes der zweiten Zwangsführungsmittel an einer Seitenfläche (6, 7) eines Führungskörpers(1, 2) angebracht ist.

4. Linearbewegungsführung nach Anspruch 3, **dadurch gekennzeichnet, dass** die Seitenfläche (6, 7) im wesentlichen parallel zur Längsbewegungsachse verläuft.

5. Linearbewegungsführung nach einem der vorhergehenden Ansprüche, **dadurch gekennzeichnet, dass** zumindest eines der Zwangsführungsmittel durch eine Schnappverbindung an einem der Führungskörper befestigt ist.

6. Linearbewegungsführung nach einem oder mehreren der vorhergehenden Ansprüche, **dadurch gekennzeichnet, dass** zweite Zwangsführungsmittel von unterschiedlichen Führungskörpern (1, 2) an jeweils anderen Seiten der beiden Führungskörper (1, 2) angeordnet sind.

7. Linearbewegungsführung nach einem der vorstehenden Ansprüche, **dadurch gekennzeichnet, dass** die Zahnstangen (8, 9) jeweils als Winkelprofil mit einem Befestigungsschenkel (21, 22) und einem gegenüber dem Befestigungsschenkel abgewinkelten Zahnschenkel (18, 19) ausgebildet sind, wobei der Befestigungsschenkel (21, 22) an einer Seitenfläche (6, 7) der Führungskörper (1, 2) anliegt und der Zahnschenkel (18, 19) in einen Spalt (20) zwischen die beiden Führungskörper ragt.

8. Linearbewegungsführung nach einem der vorhergehenden Ansprüche, **dadurch gekennzeichnet, dass** die Länge der Zahnstangen (8, 9) im wesentlichen der Hälfte der maximalen Verschiebelänge entspricht, entlang der die beiden Führungskörper relativ zueinander verschiebbar sind.

9. Linearbewegungsführung nach einem der vorhergehenden Ansprüche, **dadurch gekennzeichnet, dass** an dem Käfig (11) ein als Zahnrad (15) ausgebildetes erstes Zwangsführungsmittel vorhanden ist, das mit den Zahnstangen (8, 9) in Wirkverbindung steht.

10. Linearbewegungsführung nach Anspruch 9, **dadurch gekennzeichnet, dass** das Zahnrad (15) eine gegenüber der Längsbewegungsachse (3) senkrecht ausgerichtete Rotationsachse (16) aufweist, die beide Führungskörper schneidet.

11. Linearbewegungsführung nach einem der vorhergehenden Ansprüche 9 oder 10, **dadurch gekennzeichnet, dass** das Zahnrad (15) in Bezug auf die Längsbewegungsrichtung in etwa in der Mitte des Käfigs (11) angeordnet ist.

12. Linearbewegungsführung nach einem der vorhergehenden Ansprüche, **dadurch gekennzeichnet, dass** zumindest einer der Führungskörper (1, 2) einen im wesentlichen rechteckförmigen Querschnitt aufweist, wobei im Bereich einer Oberfläche des jeweiligen Führungskörpers als Ausnehmung eine V-Nut vorhanden ist.

## Claims

1. A linear motion guide for supporting and longitudinally guiding machine parts, wherein a first guide member (1) to be mounted on a machine part is guided relative to a second guide member (2) to be mounted on a machine part as well along a longitudinal axis of motion (3) by means of several rolling members (10, 110), wherein each guide member (1, 2) features a groove-shaped recess (4, 5) that extends parallel to the longitudinal axis of motion (3) and the boundary surfaces (4a, 4b, 5a, 5b) of the recess (4, 5) of each guide member serve as rolling surfaces for the rolling members (10, 110), wherein one or more rows of rolling members (10, 110) are arranged between the two guide members (1, 2) in at least one cage (11) and the cage (11) is provided with at least one first restricted guidance means (15), wherein the cage (11) is guided on second restricted guidance means (8, 9) mounted on the guide members (1, 2) with its first restricted guidance means and each second restricted guidance means (9, 8) is arranged on one of the guide members (1, 2) only, namely stationarily referred thereto, and wherein the second restricted guidance means (8, 9) are mounted on the respective guide members (1, 2) outside the groove-shaped recess (4, 5) such that they protrude between the two guide members (1, 2), namely in order to guide the first restricted guidance means (15), as well as functionally connected to the first restricted guidance means (15) at this location,
**characterized in that**
- the second restricted guidance means (8, 9) respectively feature a functional connecting part that is functionally connected to the first restricted guidance means (15), wherein the longitudinal direction of the functional connecting part extends parallel to the longitudinal axis of motion (3), and wherein
- the functional connecting part of at least one of the second restricted guidance means is realized in the form of a toothed rack (8, 9).

2. The linear motion guide according to claim 1, **characterized in that** at least one of the second restricted guidance means is mounted on at least one outer surface (1a, 2a, 6, 7) of the guide members (1, 2).

3. The linear motion guide according to one of preceding claims 1 and 2, **characterized in that** each of the second restricted guidance means is arranged on a lateral surface (6, 7) of a guide member (1, 2).

4. The linear motion guide according to claim 3, **characterized in that** the lateral surface (6, 7) essentially extends parallel to the longitudinal axis of motion.

5. The linear motion guide according to one of the preceding claims, **characterized in that** at least one of the restricted guidance means is mounted on one of the guide members by means of a snap-on connection.

6. The linear motion guide according to at least one of the preceding claims, **characterized in that** the second restricted guidance means of different guide members (1, 2) are respectively arranged on different sides of the two guide members (1, 2).

7. The linear motion guide according to one of the preceding claims, **characterized in that** the toothed racks (8, 9) are respectively realized in the form of an angle section with a mounting limb (21, 22) and a toothed limb (18, 19) that is angled relative to the mounting limb, wherein the mounting limb (21, 22) adjoins a lateral surface (6, 7) of the guide members (1, 2) and the toothed limb (18, 19) protrudes into a gap (20) between the two guide members.

8. The linear motion guide according to one of the preceding claims, **characterized in that** the length of the toothed racks (8, 9) essentially corresponds to half the maximum length of displacement, along which the two guide members can be displaced relative to one another.

9. The linear motion guide according to one of the preceding claims, **characterized in that** a first restricted guidance means in the form of a gearwheel (15) is provided on the cage (11) and functionally connected to the toothed racks (8, 9).

10. The linear motion guide according to claim 9, **characterized in that** the gearwheel (15) has an axis of rotation (16) that is oriented perpendicular to the longitudinal axis of motion (3) and intersects both guide members.

11. The linear motion guide according to one of preceding claims 9 or 10, **characterized in that** the gearwheel (15) is arranged approximately in the center of the cage (11) referred to the longitudinal direction of displacement.

12. The linear motion guide according to one of the preceding claims, **characterized in that** at least one of the guide members (1, 2) has an essentially rectangular cross section, wherein a recess in the form of a V-groove is provided in the region of a surface of the respective guide member.

## Revendications

1. Guide à mouvement linéaire pour l'appui et le guidage longitudinal de pièces de machines, dans lequel un premier corps de guidage (1) conçu pour être fixé à une pièce de machine est guidé par plusieurs corps roulants (10, 110) par rapport à un deuxième corps de guidage (2) également conçu pour être fixé à une pièce de machine le long d'un axe de mouvement longitudinal (3), chaque corps de guidage (1, 2) comporte pour ce faire un évidement (4, 5) en forme de gorge s'étendant parallèlement à l'axe de mouvement longitudinal (3), il est prévu des surfaces de limitation (4a, 4b, 5a, 5b) de l'évidement (4, 5) de chaque corps de guidage comme surfaces de roulement pour les corps roulants (10, 110), les corps roulants (10, 110) sont disposés les uns derrière les autres entre les deux corps de guidage (1, 2) en une ou plusieurs rangées dans au moins une cage (11), la cage (11) est pourvue d'au moins un premier moyen de guidage forcé (15), la cage (11) étant guidée par son premier moyen de guidage forcé à l'aide de deuxièmes moyens de guidage forcé (8, 9) fixés sur les corps de guidage (1, 2), chaque deuxième moyen de guidage forcé (9, 8) étant disposé seulement sur un des corps de guidage (1, 2) et étant fixe par rapport à celui-ci, les deuxièmes moyens de guidage forcé (8, 9) étant fixés à l'extérieur des évidements en forme de gorges (4, 5) sur le corps de guidage respectif (1, 2) et dépassant, pour guider le premier moyen de guidage forcé (15), entre les deux corps de guidage (1, 2) et étant ici en liaison fonctionnelle avec le premier moyen de guidage forcé (15),
**caractérisé en ce que**
- les deuxièmes moyens de guidage forcé (8) comportent respectivement une pièce de raccordement fonctionnel en liaison fonctionnelle avec le premier moyen de guidage forcé (15), la pièce de raccordement fonctionnel ayant une extension longitudinale orientée parallèlement à l'axe de mouvement longitudinal (3), tandis que
- la pièce de raccordement fonctionnel est constituée d'au moins un des deuxièmes moyens de guidage forcé faisant office de crémaillère (8, 9).

2. Guide à mouvement linéaire selon la revendication 1, **caractérisé en ce qu'**au moins un des deuxièmes moyens de guidage forcé est fixé sur au moins une surface extérieure (1a, 2a, 6, 7) des corps de guidage (1, 2).

3. Guide à mouvement linéaire selon une des revendications précédentes 1 et 2, **caractérisé en ce que** chacun des deuxièmes moyens de guidage forcé est installé sur une surface latérale (6, 7) d'un corps de guidage (1, 2).

4. Guide à mouvement linéaire selon la revendication 3, **caractérisé en ce que** la surface latérale (6, 7) s'étend sensiblement parallèlement à l'axe de mouvement longitudinal.

5. Guide à mouvement linéaire selon une des revendications précédentes, **caractérisé en ce qu'**au moins un des moyens de guidage forcé est fixé par un raccord clippé sur un des corps de guidage.

6. Guide à mouvement linéaire selon une ou plusieurs des revendications précédentes, **caractérisé en ce que** de deuxièmes moyens de guidage forcé de corps de guidage différents (1, 2) sont installés sur respectivement d'autres côtés des deux corps de guidage (1, 2).

7. Guide à mouvement linéaire selon une des revendications précédentes, **caractérisé en ce que** les crémaillères (8, 9) sont réalisées respectivement sous forme de profilé angulaire comportant une branche de fixation (21, 22) et une branche dentée (18, 19) coudée par rapport à la branche de fixation, tandis que la branche de fixation (21, 22) touche une surface latérale (6, 7) des corps de guidage (1, 2) et que la branche dentée (18, 19) dépasse dans un intervalle (20) entre les deux corps de guidage.

8. Guide à mouvement linéaire selon une des revendications précédentes, **caractérisé en ce que** la longueur des crémaillères (8, 9) équivaut sensiblement à la moitié de la longueur maximale de déplacement le long duquel les deux corps de guidage peuvent se déplacer l'un par rapport à l'autre.

9. Guide à mouvement linéaire selon une des revendications précédentes, **caractérisé en ce que**, sur la cage (11), se trouve un premier élément de guidage forcé réalisé sous forme de roue dentée (15) qui est en liaison fonctionnelle avec les crémaillères (8, 9).

10. Guide à mouvement linéaire selon la revendication 9, **caractérisé en ce que** la roue dentée (15) présente un axe de rotation (16) orienté perpendiculairement par rapport à l'axe de mouvement longitudinal (3) coupant les deux corps de guidage.

11. Guide à mouvement linéaire selon une des revendications précédentes 9 ou 10, **caractérisé en ce que** la roue dentée (15) est disposée approximativement au centre de la cage (11) par rapport au sens de mouvement longitudinal.

12. Guide à mouvement linéaire selon une des revendications précédentes, **caractérisé en ce qu'**au moins un des corps de guidage (1, 2) présente une section transversale sensiblement rectangulaire, tandis qu'il est prévu comme évidement une gorge en V au niveau d'une surface du corps de guidage respectif.
